Europäisches Patentamt

European Patent Office

Office européen des brevets

(19)

(11) EP 0 596 485 B1

(12) EUROPÄISCHE PATENTSCHRIFT

(45) Veröffentlichungstag und Bekanntmachung des Hinweises auf die Patenterteilung:
03.01.1996 Patentblatt 1996/01

(51) Int Cl.⁶: **C25B 3/00**, C07C 29/70, B01D 61/44, B01J 31/40, C25B 11/04, C25B 13/04

(21) Anmeldenummer: 93117858.6

(22) Anmeldetag: 04.11.1993

(54) **Elektrochemisches Verfahren zur Herstellung von Alkalimetallalkoholaten und seine Anwendung zur Regenerierung des Katalysators bei der Methylformiatsynthese**

Electrochemical process for preparing alcoholates of alkaline metal and use thereof for regeneration of the catalyst in the synthesis of methylformat

Procédé électrochimique pour la préparation d'alcoolats des métaux alcalin ainsi que son utilisation pour régénérer le catalyseur de la synthèse de formiate de méthyl

(84) Benannte Vertragsstaaten:
**AT BE CH DE DK ES FR GB GR IE IT LI LU MC NL PT SE**

(30) Priorität: 05.11.1992 DE 4237333

(43) Veröffentlichungstag der Anmeldung:
**11.05.1994 Patentblatt 1994/19**

(73) Patentinhaber:
• **Salzgitter Anlagenbau Zweigniederlassung der Preussag Anlagenbau GmbH D-38223 Salzgitter (DE)**
• **BORISLAWER WISSENSCHAFTS- UND FORSCHUNGSINSTITUT BNII " SYNTHEZ" Borislaw 293 760 (UA)**

(72) Erfinder:
• **Sobotta, Georg, Dr.-Ing.**
  **W-38239 Salzgitter (DE)**
• **Pazderski, Juri Antonowitsch, Prof. Dr.**
  **293760 Borislaw, Gebiet Lwow (UA)**
• **Skatschko, Wladimir Petrowitsch, Dr.**
  **293760 Borislaw, Gebiet Lwow (UA)**
• **Lezjuk, Wassili Wladimirowitsch**
  **293760 Borislaw, Gebiet Lwow (UA)**
• **Tagajew, Oleg Alexejewitsch, Dr.**
  **293760 Borislaw, Gebiet Lwow (UA)**

(74) Vertreter: **Drömer, Hans-Carsten**
**D-30625 Hannover (DE)**

(56) Entgegenhaltungen:
EP-A- 0 146 771    DE-A- 4 233 191

## Beschreibung

Die Erfindung gehört in den Bereich der Technologie der industriellen organischen Synthese, insbesondere zu den Verfahren der Herstellung von Alkalimetallalkoholaten und der Regeneration des Katalysators der Methylformiatsynthese.

Alkalimetall-Alkoholate werden gemeinhin verwendet in der organischen Synthese als Reagens oder Katalysator, zum Beispiel bei der Synthese von Methylformiat. Die industrielle Herstellung dieser Verbindungen basiert auf Reaktionen von $C_1$-$C_6$-Alkoholen mit Na, K, Li-Hydroxiden (DE - OS 3 723 193, IPC C07c 29/70, veröffentlicht am 26.01.1989) oder von $C_1$-$C_6$-Alkoholen mit entsprechenden Metallen oder deren Amalgamen (DE - OS 3 437 152, IPC C07c 31/30, veröffentlicht am 17.04.1986).

Der hauptsächliche Nachteil des ersten Verfahrens ist während des Prozesses die Bildung von Wasser, in dessen Anwesenheit das Alkoholat hydrolysiert, was dazu zwingt, spezielle technologische Verfahren zur Beseitigung des Wassers zu erschliessen. Die zweite Methode ist in Anbetracht der Verwendung von Metall und der hierbei erfolgenden Bildung von Wasserstoff durch eine erhöhte Brand- und Explosionsgefahr gekennzeichnet.

Der angemeldeten Erfindung am nächsten kommt nach seinem technologischen Charakter und den erzielten Ergebnissen das Verfahren der elektrochemischen Herstellung von Alkalimetall-Alkoholaten, gemäß dem in einem durch eine Kationenaustauschmembran begrenzten Kathodenraum das Alkoholat sich bildet, aus dem bei Reduktion des Alkohol-Wasserstoffs im Kathodenraum sich bildenden Alkoholat-Anion und dem Metall-Kation, das aus der anodischen Alkalimetall-Salzlösung im Alkohol auch durch die Membran diffundiert (DE-OS 3 346 131, IPC C25 b 3/12, veröffentlicht am 27.06.1985).

Gemäß dem genannten Verfahren wird als Ionenaustauschmembran ein Tetrafluorethen-Mischpolymerisat mit perfluorierten Vinylsulfonsäuren verwendet, bekannt unter dem Handelsnamen Nafion 214 oder Nafion 417 (Nafion ist ein Produkt von DuPont). Bei einer Ausgangskonzentration des Natriummethylats im Katholyt von 0,4 Mol/l, der Natriumsalze (Acetat, Bromid, Chlorid, Chlorat) im Anolyt von 1,0 - 1,4 Mol/l, einer Potentialdifferenz zwischen den Elektroden von 5,7-10 V und einer Stärke des Anodenstroms von 1,2 A wird eine Leistung von 35-40 mMol/h Natriummethylat erreicht, wobei die Durchgangsstromausbeute im Bereich von 57 - 80 % liegt und 84 % nicht überschreitet. In der Beschreibung des BRD-Patents 3 346 131 fehlen einige wichtige Angaben (z.B. Konstruktionsmaße des Elektrolyseapparates) wodurch es nicht möglich ist, die technisch-ökonomischen Kennziffern des vorgeschlagenen Verfahrens richtig zu beurteilen.

Ein Mangel des bekannten Verfahrens ist die unzureichende Selektivität des Prozesses (maximal 85 %) und die nicht hohe Stromausbeute des zweckbestimmten Natriummethylats (57 - 84 %), was bedingt ist durch die niedrige elektrische Leitfähigkeit des Katholyts, die niedrige Anodenstromdichte, den Ablauf unerwünschter Nebenreaktionen (Oxidation des Methylat-Anions im Anodenraum). Das zusätzliche Studium des bekannten Verfahrens (siehe Vergleichsbeispiel 2) zeigte die mangelhafte Beständigkeit der vorgeschlagenen Ionenaustauschmembranen im Reaktionsmedium (nach 14 Betriebsstunden zersetzen sich die Membranen aus Nafion 214).

Ziel des vorgeschlagenen Verfahrens der Synthese von Alkoholaten alkalischer Metalle ist die Erhöhung der Selektivität des elektrochemischen Prozesses und der Stromausbeute der Zweckprodukte, die Realisierung eines kontinuierlichen Prozesses bei langer Betriebsdauer der Elektroden- und Membranmaterialien und seine Nutzung für die Regeneration des Katalysators der Methylformiatsynthese.

Das gesetzte Ziel wird erreicht durch ein Verfahren, wie es Gegenstand des unabhängigen Anspruchs 1 ist. Vorzugsweise werden Lösungen von Formiaten, Carbonaten, Hydroxiden und Methylaten der Alkalimetalle (Anolyt) im Elektrolyseapparat mit durch Ionenselektivmembran getrennten Kathoden- und Anodenraum einer Elektrolyse unterzogen werden in Anwesenheit von 1 - 10 g auf 1 l Katholyt und Anolyt des Lithium-, Kalium- oder Natriumsalzes der Perfluoralkansulfonsäuren

$C_2F_5O\,(CFXCF_2O)_n\,C_2F_4SO_3M$ X = F, $CF_3$;

n = 0 bis 2;

M = Na, K, Li

wobei als oxidationsbeständiges Anodenmaterial Glaskohlenstoff (glassy carbon, glasartiger Kohlenstoff) oder eine Rutheniumoxid-Titan- Anode verwendet wird und als ionenselektive Membran ein Kationenaustauscher auf Basis eines Styrol-Divinylbenzol-Mischpolymers.

Die Verwendung von 1 - 10 g/l über oberflächenaktive Eigenschaften verfügenden und in alkoholischer Lösung leicht dissoziierenden Oxaperfluoralkansulfonaten als Zusatz zu Katholyt und Anolyt ermöglicht es, erstens die elektrische Leitfähigkeit der Elektrolyte zu erhöhen und, entsprechend die Dichte des Anodenstroms und die Produktivität des Prozesses zu erhöhen. Zweitens ermöglicht es die Verwendung solcher Salze, die über oberflächenaktive Eigenschaften verfügen, den Diffusionswiderstand der Kationen beim Übergang aus dem Anolyt in den Katholyt, besonders an den Grenzen Anolyt - Membran - Katholyt, zu verringern. Hierdurch erhöhen sich die Selektivität des Elektrolyse-Prozesses und die Stromausbeute der Zweckprodukte. Von den vorgeschlagenen Peroxafluoralkansulfonaten ist am zweckmäßigsten die Verwendung von Kalium- (oder Natrium-) Perfluor-3,6-Dioxa-5-Methyloctansulfonaten $C_2F_5OCF(CF_3)$

$CF_2OC_2F_4SO_3K(Na)$ in Anbetracht der Verfügbarkeit der genannten Verbindungen. Erfindungsgemäße Lösungsmöglichkeiten, die sowohl die Erhöhung der Selektivität des elektrochemischen Prozesses als auch die Realisierung einer andauernden kontinuierlichen Synthese der Alkoholate ermöglichen, sind die Verwendung von Glaskohlenstoff- oder Rutheniumoxid-Anodenmaterial und einer ionenselektiven Membran auf Basis eines sulfonierten Styrol-Divinylbenzol-Mischpolymers, die in Reaktionslösungen beständig ist.

Neu bei dem vorgeschlagenen Verfahren sind: die Verwendung eines Zusatzes von 1 - 10 g/l Kalium- oder Natrium-Peroxafluoralkansulfonat-Elektrolyten; die Verwendung von Glaskohlenstoff oder Titan, mit Rutheniumoxid überzogen, als Anodenmaterial; die Verwendung von sulfoniertem Styrol- und Divinylbenzol-Mischpolymer als ionenselektive Membran.

Das vorgeschlagene Verfahren kann nicht nur zur Herstellung der Alkalimetall-Alkoholate genutzt werden, sondern auch für die Regeneration von Katalysatorlösungen für Prozesse verwendet werden, in denen als Katalysatoren Alkalimetall-Alkoholate verwendet werden (Synthese von Methylformiat, Dimethylformamid, Vitamin B und sonst.). Beispiel eines solchen Prozesses ist die Synthese von Methylformiat durch Carbonylierung von Methanol, in welchem der Katalysator (Natriummethylat) infolge von Nebenreaktionen in Natriumformiat umgewandelt wird, das in der Carbonylierung des Methanols inaktiv ist. Das vorgeschlagene Verfahren erlaubt die Regenerierung des Katalysators der Methylformiat-Synthese und ist in erster Linie für diese Zwecke geeignet.

Das Wesen der vorgeschlagenen Erfindung wird durch folgende Beispiele illustriert.

Beispiel 1

Der Prozess der elektrochemischen Synthese von Alkoholaten erfolgt in einem horizontalen Labor-Elektrolyseapparat vom Filterpressentyp, die Rahmen der Elektrodenzellen werden aus organischem Glas ausgeführt. Das Volumen der Anodenzellen beträgt 200 cm3 und das der Kathodenzellen 80 cm3. Als Anodenmaterial wird Glaskohlenstoff verwendet, als Kathodenmaterial Stahlgeflecht. Der Abstand zwischen Kathode und Anode beträgt 5 mm, die Oberfläche der Anode ist gleich 0,7 dm$^2$, die der Ionenaustauschmembran 1 dm$^2$. Als Kationenaustauschmembran, die den Anoden- und den Kathodenraum trennt, wird die Standardmembran MK-40 verwendet, die ein kapronverstärktes sulfoniertes Styrol- und Divinylbenzol-Mischpolymer darstellt.

Zur Ableitung der Reaktionsgase, Zuführung und Ableitung von Anolyt und Katholyt ist jede Elektrolytzelle mit individuellen entsprechenden Stutzen versehen.

Alle unten angeführten Beispiele werden in der gleichen Apparatur realisiert.

In die Kathodenkammer des Elektrolyseapparats werden stündlich 35 cm$^3$ (27,9 g) einer Methanol-Lösung zugegeben, die maximal 0,02 Masse% Wasser und 3 g/l Natrium-Perfluor-3,6-Dioxa-5-Methyloctansulfonat enthält. In die Anodenkammern des Elektrolyseapparats werden 100 cm$^3$/h (82,2 g/h) einer Methanol-Lösung geleitet, die 8 g/l des gleichen Natriumsulfonats, 2,55 Masse % (0,308 Mol/l) Natriumformiat und 0,12 Masse % Wasser enthält. (Masse% entspricht Gewichts%).

Nach 2 Stunden Elektrolyse wird stationäre Betriebsweise bei einer Stromstärke von 0,85 A und einer Spannung von 10 V eingestellt. Aus den Anodenzellen werden kontinuierlich abgeleitet 90 cm$^3$/h oder 71,84 g/h einer Lösung, enthaltend 1,11 Masse % Natrium-Perfluor-3,6-Dioxa-Methyloctansulfonat oder 0,8 g/h (8,88 g/l Lösung),

0,10 Masse% Natriumformiat oder 0,072 g/h,
0,09 Masse% Wasser oder 0,065 g/h und
98,7 Masse% Methanol oder 70,91 g/h.

Die Zusammensetzung von Anolyt und Katholyt wird durch standardisierte chemische (Neutralisationstitration, Bestimmung der Feuchtigkeit durch K. Fischer-Methode, Redox-Titration des Formiat-Anions) und gaschromatographische Analysemethoden bestimmt.

Nach Erreichen der stationären Betriebsweise werden aus dem Kathodenraum des Elektrolyseapparats kontinuierlich 46 cm$^3$/h oder 36,886 g/h des Katholyts abgeleitet, der nach Analysedaten enthält:

4,24 Masse% Natriummethylat oder 1,564 g/h
94,88 Masse% oder 34,999 g/h
0,09 Masse% Natriumhydroxid oder 0,033 g/h
0,03 Masse% Wasser oder 0,010 g/h und
0,76 Masse% Natrium-Perfluor-3,6-Dioxa-5-Methyloctansulfonat oder 0,28 g/h (6,09 g/l Katholyt).

Aus der Kathodenzelle werden kontinuierlich 673 cm$^3$/h Wasserstoff oder 0,0600 g/h abgeleitet, aus dem Anodenraum werden 676 cm$^3$/h Abgas, enthaltend 98,65 Vol.% Kohlendioxid (oder 1,310 g/h) und 1,35 Vol.% Sauerstoff (oder 0,013 g/h) entfernt.

Nach 40 Std. Betrieb des Elektrolyseapparats sind dessen Betriebskennziffern unverändert, Anzeichen für Zersetzung des Anodenmaterials oder der Ionenaustauschermembran wurden nicht entdeckt.

Im Laufe des vorgeschlagenen Prozesses läuft im Anodenraum die Oxidation des Formiat-Anions und - teilweise - des Hydoxyl-Ions ab nach den Gleichungen

$$HCOO^- ------> H^+ + CO_2 + 2e^-$$

$$OH^- ------> H^+ + 0,5 \, O_2 + 2e^-$$

Das Natriumkation und H+ diffundieren durch die Kationenaustauschmembran aus dem Anoden- in den Kathodenraum des Elektrolyseapparats. Im Katholyt bildet das Natriumkation Natriummethylat mit dem Methylat-Anion, das bei Reduktion des Alkohol-Wasserstoffs auf der Kathode erhalten wird nach der Gleichung

$$CH_3OH + e^- ------> 0,5 \, H_2 + CH_3O-$$

Somit ist bei Realisierung des Verfahrens gemäß der Erfindung die Produktivität des Elektrolyseapparats gleich 29,0 mMol/h Natriummethylat je 1 dm$^2$ Membranfläche bei einer Anodenstrom-Dichte von 1,21 A/dm2. Hierbei betrug die Selektivität der Bildung von Natriummethylat (bezogen auf umgewandeltes Formiat) 97,23 % bei einer Stromausbeute an Natriummethylat von 90,86 % vom theoretischen Wert.

Beispiel 2, Vergleichsbeispiel (entspr. DE-OS 33461311)

Die Elektrolyse der Natriumformiatlösung erfolgt in der in Beispiel 1 beschriebenen Apparatur, lediglich mit dem Unterschied, daß als Membran ein Kationenaustauscher auf Grundlage eines Tetrafluorethen-Mischpolymers mit perfluorierten Vinylsulfonsäuren, bekannt unter dem Handelsnamen Nafion 214, verwendet wird. Als Anoden- und Kathodenmaterial wird mit Platinoxid überzogenes Platin verwendet.

Außerdem wird den Ausgangs-Elektrolyten (Anolyt, Katolyt) kein Natrium-Perfluor-3,6-Dioxa-5-Methyloctansulfonat zugesetzt.

In die Anodenzellen des Elektrolyseapparats werden 100 cm$^3$/h (oder 80,6 g/h) Methanollösung, enthaltend 2,4 Masse% (oder 0,284 Mol/l) Natriumformiat und 0,15 % Wasser gegeben.

In die Kathodenkammer werden 35 cm$^3$/h (oder 27,9 g/h) Methanol, enthaltend 0,02 Masse% Wasser gegeben.

Nach Erreichen der stationären Betriebsweise (nach 2 Std.) erfolgt die Elektrolyse bei einer Stromstärke von 1,05 A und einer Spannung von 8,0 V. Aus dem Anodenraum werden kontinuierlich 91 cm$^3$/h (oder 72,47 g/h) einer Lösung der folgenden Zusammensetzung abgeleitet:

99,812 Masse% Methanol oder 72,335 g/h
0,167 Masse% Natriumformiat oder 0,121 g/h
0,021 Masse% Wasser oder 0,015 g/h

Die Abgase des Anodenraums, 628 cm$^3$/h oder 1,216 g/h, enthalten 3,75 Vol.% Sauerstoff und 96,25 Vol.% Kohlendioxid.

Aus dem Kathodenraum werden kontiuierlich entfernt 43 cm$^3$/h oder 34,75 g/h einer Lösung der folgenden Zusammensetzung:

95,96 Masse% Methanol oder 33,35 g/h
3,68 Masse% Natriummethylat oder 1,279 g/h
0,34 Masse% Natriumhydroxid oder 0,118 g/h
0,02 Masse% Wasser oder 0,007 g/h

In Form von Kathodenraum-Abgas werden 630 cm$^3$/h Wasserstoff entfernt.

Nach 12-14-stündigem Betrieb des Elektrolyseapparats in der oben angeführten Arbeitsweise tritt nach den Resultaten von 8 parallelen Versuchen mit einer Wahrscheinlichkeit von 95,6 % eine Zersetzung der ionenselektiven Membran ein, was durch die niedrige Beständigkeit des Tetrafluorethen-Mischpolymers mit perfluorierten Vinylsulfonsäuren in Methanol-Lösung zu erklären ist.

Auf diese Weise ist die Produktivität des Elektrolyseapparates für Natriummethylat nur 23,7 mMol/h je 1 dm$^2$ Membran bei einer Dichte des Anodenstroms von 1,5 A/dm$^2$. Hierbei betrug die Selektivität der Natriummethylatbildung (bezogen auf umgewandeltes Formiat) 88,95 %, und CH$_3$ONa-Stromausbeute ist nur 60,13 % vom theoretischen Wert. Beim Vergleich des Beispiels 2 (Prototyp) mit Beispiel 1 der vorgeschlagenen Erfindung ist ersichtlich, daß die Hauptkennwerte des Beipiels 1 besser sind: nach Produktivität (29,0 mMol/h dm$^2$ gegen 23,7 mMol/h dm$^2$), Selektivität der Bildung von Natriummethylat (97,23 % gegen 88,95 %) und dessen Stromausbeute (90,86 % gegen 60,13 %). Außerdem ist die Funktionsfähigkeit des Ionenaustauschmaterials nach dem angemeldeten Verfahren erheblich höher im Vergleich zum Beispiel 2.

<u>Beispiele 3 - 8</u>

Einfluß der Elektrodenmaterialien, der Zusammensetzung der Elektrolyte, der Natur der Natrium- oder Kalium-Ausgangssalze.

Die Elektrolyse der alkoholischen Lösungen der Verbindungen alkalischer Metalle erfolgt in einer Apparatur, die Beispiel 1 entspricht. Alle Parameter des Prozesses werden in der Beispieltabelle angeführt.

In den Beispielen ist die Möglichkeit der Herstellung von Alkalimetall-Alkoholaten der Alkohole $C_1$ - $C_4$ mit hoher Produktivität und Selektivität bei hoher (79,3 - 89,1) Stromausbeute der Zweckprodukte aufgezeigt.

Die Verringerung des Gehalts an Kalium- (oder Natrium-) oxaperfluoralkansulfonaten in den Ausgangs-Elektrolyten bis auf 1 g/l führt zu einer entsprechenden Verringerung der Hauptkennziffern des Prozesses, bei einer Konzentration der Sulfonate von mehr als 10 g/l wird eine weitere Erhöhung der Produktivität und Selektivität des Prozesses, der Stromausbeute an Alkoholat nicht beobachtet.

Bei Verwendung von oxidierbarem Anodenmaterial (Stahl, Titan) verringert sich die Selektivität des Prozesses und außerdem wird der Anolyt durch die Anodenkorrosionsprodukte verschmutzt, die ionenselektive Membran verliert ihre Eigenschaften, die Bedingungen der Diffusion der Alkalimetall-Kationen aus dem Anolyt in den Katholyt verschlechtern sich. Über Eigenschaften, die der Glaskohlenstoff-Anode nahekommen, verfügt Rutheniumoxid-Titan-Anodenmaterial (Beispiel 6).

<u>Beispiel 9</u>

Regeneration des Katalysators der Carbonylierung von Methanol.

Die Elektrolyse der Kontaktlösung der Carbonylierung von Methanol in Methylformiat erfolgt in der in Beispiel 1 beschriebenen Apparatur, wobei die Zusammensetzung des Ausgangskatholyts und -anolyts identisch ist und das praktisch einzige Resultat des elektrochemischen Prozesses die Oxidation des Formiatanions im Anodenraum und die Ansammlung von Natriummethylat im Kathodenraum darstellen.

In den Kathoden- und den Anodenraum des Elektrolyseapparats werden kontinuierlich je 100 $cm^3$/h Kontaktlösung aus der Carbonylierung des Methanols, die regeneriert werden soll, der folgenden Zusammensetzung eingeleitet:

```
Methanol              92,84 Masse% oder        76,92 g/h
Natriummethylat       2,52 Masse% oder          2,086 g/h
Natriumhydroxid       0,09 Masse% oder          0,073 g/h
Natriumformiat        2,05 Masse% oder          1,690 g/h
Wasser                0,05 Masse% oder          0,040 g/h
```

$$\text{Natrium-Perfluor-3,6-Dioxa-5-Methyloctansulfonat}$$
$$C_2F_5OCF\ (CF_3)\ CF_2OC_2F_4SO_3Na\ \ 0,95\ \text{Masse\% oder}\ 0,8\ \text{g/h;}\ 8,8\ \text{g/l}$$

```
Methylformiat         1,5 Masse%  oder          1,243 g/h
```

Im Ergebnis der Elektrolyse bei 8 V und einer Stromstärke 1,2 A werden aus der Anodenkammer kontinuierlich abgeleitet 93 $cm^3$/h oder 74,97 g/h einer Lösung der folgenden Zusammensetzung:

| | | |
|---|---|---|
| Methanol | 95,03 Masse % | oder 71,24 g/h |
| Natriummethylat | 1,21 Masse % | oder 0,904 g/h |
| Natriumformiat | 0,52 Masse % | oder 0,393 g/h |
| Natriumhydroxid | 0,07 Masse % | oder 0,052 g/h |
| Wasser | 0,01 Masse % | oder 0,009 g/h |
| Natriumsulfonat | 1,07 Masse % | oder 0,8 g/h |
| Methylformiat | 2,096 Masse % | oder 1,571 g/h |

und als Anodenabgas (435 cm$^3$/h) - Gas, enthaltend 98,18 Vol.% Kohlendioxidgas und 1,82 Vol.% Sauerstoff.

Aus der Kathodenkammer werden kontinuierlich entfernt 672 cm$^3$/h Abgas-Wasserstoff und 107 cm$^3$/h oder 89,82 g/h einer Lösung der folgenden Zusammensetzung:

| | | |
|---|---|---|
| Methanol | 90,93 Masse % | oder 81,67 g/h |
| Natriummethylat | 4,230 Masse % | oder 3,247 g/h |
| Natriumformiat | 1,88 Masse % | oder 1,690 g/h |
| Natriumhydroxid | 0,152 Masse % | oder 0,132 g/h |
| Wasser | 0,04 Masse % | oder 0,036 g/h |
| Natriumsulfonat | 0,89 Masse % | oder 0,8 g/h |
| Methylformiat | 1,39 Masse % | oder 1,244 g/h |

Die flüssigen Produkte aus der Kathoden- und der Anodenkammer werden vereinigt und bei der Carbonylierung von Methanol wird wiederholt ein Produkt der folgenden Zusammensetzung genutzt:

| | | |
|---|---|---|
| Methanol | 92,79 Masse% oder | 152,91 g/h |
| Natriummethylat | 3,13 Masse% oder | 5,151 g/h |
| Natriumformiat | 1,26 Masse% oder | 2,083 g/h |
| Natriumhydroxid | 0,11 Masse% oder | 0,184 g/h |
| Wasser | 0,027 Masse % | oder 0,045 g/h |
| Natriumsulfonat | 0,97 Masse % | oder 1,60 g/h |
| Methylformiat | 1,708 Masse % | oder 2,815 g/h |

Im Vergleich zur Ausgangs-Kontaktlösung der Methanol-Carbonylierung enthält das Elektrolyseprodukt im Ergebnis der elektrochemischen Umwandlung um 24,2 % mehr Natriummethylat, um 62,7 % weniger Natriumformiat, um 12,6 % weniger hydroxylhaltige Komponenten (Wasser und Natriumhydroxid) und um 13,9 % mehr Methylformiat.

Auf diese Weise ist gemäß dem vorgeschlagenen Verfahren die Aufgabe der Regeneration des Katalysators der Methanol-Carbonylierung, die Umwandlung des in der Reaktion inaktiven Natriumformiats in Natriummethylat, gelöst, und nebenbei wurde die Menge des Methylformiats im Reaktionsgemisch erhöht.

Im Beispiel Nr. 9 der Realisierung des vorgeschlagenen Verfahrens wurden folgende hauptsächliche technisch-ökonomische Kennziffern des Prozesses erreicht: Produktivität von Natriummethylat im Katholyt 40,0 mMol/h je 1 dm$^2$ Membran, Gesamtproduktivität von Natriummethylat im vereinigten Produkt 18,1 mmol/h je 1 dm$^2$ Membran, Umwandlung des Natriumformiats 38,4 %, Selektivität der Natriummethylat-Bildung 95,05 %. Stromausbeute des Natriummethylats 40,28 %.

Bei der Regeneration des Katalysators der Methanolcarbonylierung läuft im Kathodenraum die Reduktion des Kations H$^+$ des Methanol-Moleküls ab und die Bildung des Methylat-Anions:

$$CH_3OH + e^- \text{------>} 0,5\, H_2 + CH_3O^-$$

Das Methylat-Anion bildet ein Natriummethylat-Molekül mit dem aus dem Anodenraum diffundierenden Natriumkation:

$$CH_3O^- + Na^+ \iff CH_3ONa$$

Zusammen mit dem Natriumkation diffundieren zum Katholyt durch die Membran aus dem Anolyt Methanol und, teilweise, Beimischungswasser, dessen Anwesenheit zu einer teilweisen Hydrolyse des Natriummethylats mit Bildung einer zusätzlichen Menge Natriumhydroxid führt.

Im Anodenraum laufen zwei konkurrierende Oxidationsprozesse ab: das Formiat-Anion wird oxidiert unter Bildung von CO$_2$, das Methylat-Anion wird teilweise bis zum Formaldehyd oxidiert:

$$HCOO\text{-} \text{-------->} CO_2 + H^+ + 2e^-$$

$$CH_3O\text{-} \text{-------->} CH_2O + H^+ + 2e^-$$

Das Formaldehyd, das sich im stark alkalischen Anolyt gebildet hat, wird durch Kondensation teilweise zum Methylformiat umgesetzt, was auch einen Grund für die Erhöhung dessen Konzentration im Produkt darstellt.

## Beispiele 3 - 8

| Ausgangskatholyt, Zusammensetzung | Ausgangsanolyt, Zusammensetzung | Anode * | Spannung V | Stromstärke A | Produktivität mMol Alkalimetall-Alkoholat $h^{-1} dm^{-2}$ | Selektivität der Alkalimetall-Alkoholat Bildung % | Stromausbeute Alkalimetall-Alkoholat % |
|---|---|---|---|---|---|---|---|
| 3. Lösungsmittel-Methanol $C_2F_5OC_2F_4OC_2F_4SO_3K$ - 1 g/l | Lösungsmittel-Methanol $C_2F_5OC_2F_4OC_2F_4SO_3K$ - 1 g/l $K_2CO_3$ - 0,45 Mol/l | GK | 8,0 | 0,80 | 25,7 | 92,1 | 82,1 |
| 4. Lösungsmittel-Methanol $C_2F_5OC_2F_4SO_3Na$ - 10 g/l | Lösungsmittel-Methanol $C_2F_5OC_2F_4SO_3Na$ - 10 g/l HCOONa - 0,46 Mol/l | GK | 8,0 | 1,05 | 32,0 | 94,1 | 91,1 |
| 5. Lösungsmittel-Ethanol $C_2F_5(OC_2F_4)_2OC_2F_4SO_3Na$ - 2 g/l | Lösungsmittel-Ethanol $C_2F_5(OC_2F_4)_2OC_2F_4SO_3Na$ - 2 g/l HCOONa - 0,44 Mol/l | ORTA | 10,0 | 0,9 | 27,3 | 88,7 | 80,0 |
| 6. Lösungsmittel Butanol-1 $C_2F_5OC_2F_4SO_3Li$ - 5 g/l | Lösungsmittel Butanol-1 $C_2F_5OC_2F_4SO_3Li$ - 5 g/l HCOOLi - 0,42 Mol/l | GK | 10,0 | 0,70 | 26,0 | 96,6 | 89,1 |
| 7. Lösungsmittel-Methanol $C_2F_5OCF(CF_3)CF_2OC_2F_4SO_3Na$ - 5 g/l | Lösungsmittel-Methanol $C_2F_5OCF(CF_3)OC_2F_4SO_3Na$ 5 g/l, HCOONa - 0,44 Mol/l | Stahl | 8,0 | 1,4 | 24,6 | 85,4 | 46,9 |
| 8. Lösungsmittel-Methanol $C_2F_5OC_2F_4SO_3Na$ - 5 g/l | Lösungsmittel-Methanol $C_2F_5OC_2F_4SO_3Na$ - 5 g/l HCOONa - 0,43 Mol/l | Titan | 8,0 | 1,25 | 26,2 | 78,1 | 55,9 |

* Anodenmaterialien: GK - Glaskohlenstoff, ORTA - Oxid-Ruthenium-Titan-, Stahl - OCr18N10T, Titan - WT1-0

EP 0 596 485 B1

**Patentansprüche**

1. Verfahren zur elektrochemischen Synthese von Alkalimetall-Alkoholaten und Regeneration des Katalysators der Methylformiat-Synthese aus alkoholischen Lösungen von Salzen alkalischer Metalle im Elektrolyseapparat mit durch eine ionenselektive Membran getrennten Kathoden- und Anodenraum, dadurch gekennzeichnet, daß zur Erhöhung der Selektivität und Intensivierung des elektrochemischen Prozesses, zur Erhöhung der Stromausbeute der Zweckprodukte und zur Gewährleistung der Realisierung eines kontinuierlichen Prozesses bei langer Betriebsdauer der Elektroden und Membran-Materialien, die Elektrolyse alkoholischer Lösungen der Verbindungen alkalischer Metalle durchgeführt wird in Anwesenheit von 1 - 10 g/l Lithium-, Kalium- oder Natriumsalz der Peroxafluoralkansulfonsäuren der Formel $C_2F_5O(CFXCF_2O)_nC_2F_4SO_3M$, worin X = F, $CF_3$; n = 0 bis 2; M = K, Na, Li bedeuten, bei Verwendung von nicht oxidierbarem Anodenmaterial und einer ionenselektiven Membran auf der Basis eines sulfonierten Styrol-Divinylbenzol-Mischpolymers.

2. Verfahren gemäß Anspruch 1, dadurch gekennzeichnet, daß als Peroxafluoralkansulfonsäure-Salz Kalium- oder Natrium-Perfluor-3, 6-dioxa-5-Methyloctansulfonat

$$C_2F_5OCF(CF_3)CF_2OC_2F_4SO_3M$$

verwendet wird, worin M = K, Na bedeutet, bei einer Konzentration in Anoden- und Kathodenlösung von 2 - 8 g/l.

3. Verfahren gemäß Ansprüchen 1 bis 2, dadurch gekennzeichnet, daß als Ausgangsverbindungen Formiate, Hydroxide, Carbonate von Alkalimetallen verwendet werden.

4. Verfahren gemäß Ansprüchen 1 bis 3, dadurch gekennzeichnet, daß es zur Regeneration des Katalysators der Methanolcarbonylierung angewendet wird, wobei eine Natrium-Methylat-, Formiat- und Hydroxidlösung in Methanol in Anwesenheit von Natrium-Oxaperfluoralkansulfonaten einer Elektrolyse unterzogen wird.

5. Verfahren nach einem der Ansprüche 1 bis 4, dadurch gekennzeichnet, daß als nicht oxidierbares Anodenmaterial Glaskohlenstoff verwendet wird.

6. Verfahren nach einem der Ansprüche 1 bis 4, dadurch gekennzeichnet, daß als nicht oxidierbares Anodenmaterial Titan mit Rutheniumoxid-Überzug verwendet wird.

**Claims**

1. Method of electrochemically synthesizing alkali metal alcoholates and regenerating the catalyst of the methylformate synthesis from alcoholic solutions of salts of alkali metals in the electrolysis apparatus, which is provided with a cathode and anode compartment separated by an ion-selective diaphragm, characterised in that, in order to increase the selectivity and intensification of the electrochemical process, in order to increase the electrolytic efficiency of the selected products and in order to ensure the realisation of a continuous process with a long service-life for the electrode and diaphragm materials, the electrolysis of alcoholic solutions of the compounds of alkali metals is effected in the presence of 1 - 10 g/l lithium, potassium or sodium salt of peroxafluoroalkane sulphonic acids of the formula $C_2F_5O(CFXCF_2O)_nC_2F_4SO_3M$, wherein X = F, $CF_3$; n = 0 to 2; M = K, Na, Li, using non-oxidizable anode material and an ion-selective diaphragm based on a sulphonated styrene-divinylbenzene copolymer.

2. Method according to claim 1, characterised in that potassium or sodium perfluoro-3,6-dioxa-5-methyloctane sulphonate,

$$C_2F_5OCF(CF_3)CF_2OC_2F_4SO_3M,$$

is used as the peroxafluoroalkane sulphonic acid, wherein M = K, Na, with a concentration in the anode and cathode solution of 2 - 8 g/l.

3. Method according to claims 1 and 2, characterised in that formates, hydroxides and carbonates of alkali metals are used as the basic compounds.

4. Method according to claims 1 to 3, characterised in that it is used for the regeneration of the catalyst of the methanol carbonylization, whereby a sodium methylate, formate and hydroxide solution in methanol in the prEsence of sodium oxaperfluoroalkane sulphonates is subjected to an electrolysis process.

5. Method according to one of claims 1 to 4, characterised in that vitreous carbon is used as the non-oxidizable anode material.

6. Method according to one of claims 1 to 4, characterised in that titanium with a coating of ruthenium oxide is used as the non-oxidizable anode material.

**Revendications**

1. Procédé de synthèse électrochimique d'alcoolates de métaux alcalins et de régénération du catalyseur pour la synthèse du formiate de méthyle à partir de solutions alcooliques de sels de métaux alcalins dans l'appareil d'électrolyse comportant une chambre cathodique et une chambre anodique séparées par une membrane à perméabilité sélective aux ions, caractérisé en ce qu'en vue d'augmenter la sélectivité et l'intensification du processus électrochimique, d'augmenter le rendement en courant des produits visés, et de garantir la réalisation d'un processus continu avec une longue durée de service des matériaux des électrodes et de la membrane, l'électrolyse des solutions alcooliques des composés de métaux alcalins est conduite en présence de 1-10 g/l d'un sel de lithium, de potassium ou de sodium de l'acide peroxafluoroalcanesulfonique de formule

$$C_2F_5O\,(CFXCF_2O)_nC_2F_4SO_3M$$

dans laquelle X = F, CF$_3$; n = 0 à 2; M = K, Na, Li, en utilisant un matériau d'anode non oxydable et une membrane à perméabilité sélective aux ions, à base d'un copolymère de styrol sulfoné et de divinylbenzène.

2. Procédé selon la revendication 1, caractérisé en ce que l'on utilise comme sel de l'acide peroxafluoroalcanesulfonique le perfluor-3,6-dioxa-5-méthyloctanesulfonate de potassium ou de sodium

$$C_2F_5OCF(CF_3)CF_2OC_2F_4SO_3M$$

où M = K, Na, à une concentration de 2-8 g/l dans la solution anodique et dans la solution cathodique.

3. Procédé selon les revendications 1 et 2, caractérisé en ce que l'on utilise comme composés de départ des formiates, hydroxydes, carbonates de métaux alcalins.

4. Procédé selon les revendications 1 à 3, caractérisé en ce qu'il est utilisé pour la régénération du catalyseur de la carbonylation du méthanol, une solution de méthylate, de formiate et d'hydroxyde de sodium dans le méthanol étant soumise à une électrolyse en présence d'oxaperfluoroalcanesulfonates de sodium.

5. Procédé selon l'une des revendications 1 à 4, caractérisé en ce que l'on utilise comme matériau d'anode non oxydable du carbone vitreux.

6. Procédé selon l'une des revendications 1 à 4, caractérisé en ce que l'on utilise comme matériau d'anode non oxydable du titane revêtu d'oxyde de ruthénium.